# FASCICULE DE BREVET EUROPEEN

(11) **EP 4 003 817 B1**
(45) Date de publication et mention de la délivrance du brevet: **13.03.2024**
(21) Numéro de dépôt: 20753984.2
(22) Date de dépôt: 16.07.2020
(51) Int. Cl.: B62D 25/08, B62D 25/20, B62D 27/02, B62D 25/04

(54) **AGENCEMENT DE ZONE ARRIÈRE DE STRUCTURE DE CAISSE DE VÉHICULE**
ANORDNUNG EINER HINTEREN STRUKTURE EINES FAHRZEUGES
REAR STRUCTURE ARRANGEMENT OF A VEHICLE BODY

(30) Priorité: 22.07.2019 FR 1908266
(43) Date de publication de la demande: 01.06.2022
(73) Titulaire: Stellantis Auto SAS, 78300 Poissy (FR)
(72) Inventeur: VIRY, Patrick, 25200 MONTBELIARD (FR)
(86) Numéro de dépôt international: PCT/FR2020/051278
(87) Numéro de publication internationale: WO 2021/014075

(56) Documents cités:
- WO-A1-2015/068549
- CN-A- 103 183 062
- CN-U- 208 813 310
- JP-A- 2000 016 338
- JP-A- 2009 067 229
- JP-A- 2009 208 610
- US-A- 5 611 592
- US-A1- 2016 221 610
- US-B2- 9 302 711

## Description

### [Domaine technique]

La présente invention revendique la priorité de la demande française 1908266 déposée le 22 Juillet 2019.

L'invention concerne la zone arrière de la structure de caisse d'un véhicule à volet arrière de type hayon.

### [Technique antérieure]

Une telle zone arrière de structure de caisse est constituée classiquement par une pluralité de sous-ensembles réalisés au préalable et assemblés les uns aux autres sur la ligne de ferrage du véhicule, à savoir un sous-ensemble de soubassement comprenant un plancher de charge et deux extensions latérales de plancher s'étendant de part et d'autre de la partie arrière dudit plancher de charge, deux sous-ensemble latéraux de silhouette comprenant chacun une doublure de gouttière dotée d'un pied inférieur, un sous-ensemble de panneau arrière comprenant une doublure de panneau arrière dotées de deux parties latérales de jonction avec lesdits pieds inférieurs des deux sous-ensemble latéraux de silhouette, ainsi qu'un sous-ensemble de pavillon.

Ces sous-ensembles sont chacun constitués par une pluralité de pièces en tôle métallique soudées les unes aux autres. Un exemple de zone arrière de structure de caisse est divulgué par le document CN 103 183 062 A qui divulgue le préambule de la revendication 1.

Cette zone arrière de structure de caisse est caractérisée par une infinité de modes propres intrinsèques et caractérisés chacun par une déformée modale et une fréquence propre exprimée en Hertz. L'un de ces modes propres, dénommé couramment « mode de torsion de caisse », participe directement au comportement dynamique du véhicule et en particulier au confort vibratoire.

Afin d'optimiser ce comportement, il convient d'augmenter le plus possible la fréquence de ce mode propre en apportant de la raideur à cette zone arrière de structure de caisse tout en limitant l'apport de masse.

Pour ce faire, il est connu de prévoir des dispositifs de renforcement, constitués généralement d'une ou plusieurs pièces structurelles métalliques, fixés par soudure, rivetage ou collage sur les doublures de certains éléments d'un ou plusieurs sous-ensembles constitutifs de la zone arrière de cette structure de caisse.

Toutefois, la raideur de cette zone arrière de structure de caisse demeure insuffisante pour assurer un confort vibratoire satisfaisant.

### [Exposé de l'invention]

La présente invention vise à améliorer la raideur de la zone arrière de la structure de caisse d'un véhicule automobile à volet arrière de type hayon, de manière à obtenir un meilleur comportement dynamique du véhicule.

Elle propose à cet effet un agencement de zone arrière de structure de caisse de véhicule automobile à volet arrière de type hayon selon la revendication 1.

L'adjonction de ces renforts de base et pied de volet fixés rigidement deux-à-deux après l'assemblage des sous-ensembles permet, tout en limitant l'apport de masse, de rigidifier efficacement la zone arrière de structure de caisse de véhicule automobile et en particulier les zones de jonction entre le sous-ensemble soubassement et les sous-ensembles latéraux de silhouette.

Selon des caractéristiques préférées dudit agencement de zone arrière de structure de caisse selon l'invention :
- chaque renfort latéral de base est fixé par boulonnage sur un renfort de pied de volet correspondant par l'intermédiaire d'au moins une vis, introduite préalablement au travers de deux orifices superposés ménagés respectivement dans l'un et l'autre de ces éléments, puis boulonnée sur un écrou soudé sur le pourtour de l'un de ces orifices ;
- chaque renfort latéral de base est fixé par boulonnage sur un renfort de pied de volet correspondant par l'intermédiaire de deux dites vis, introduites chacune préalablement au travers de deux orifices respectifs superposés ménagés respectivement dans l'un et l'autre de ces éléments, puis boulonnées chacune sur un écrou correspondant soudé sur le pourtour de l'un de ces orifices ;
- ledit agencement comporte également deux dispositifs d'attache pour des crochets d'arrimage comprenant chacun une embase pourvue d'un orifice de fixation ainsi qu'un anneau monté mobile à libre rotation sur une première extrémité de cette embase, chaque dispositif d'attache étant fixé par boulonnage sur un renfort latéral de base et un renfort pied de volet respectifs par l'intermédiaire d'une dite vis introduite au travers de son orifice de fixation avant de traverser deux dits orifices superposés du renfort latéral de base et du renfort de pied de volet puis d'être boulonnée sur un dit écrou ;
- l'embase de chaque dispositif d'attache comprend une patte saillante traversant successivement deux fenêtres superposées ménagées respectivement dans le renfort latéral de base et le renfort de pied de volet correspondants de sorte à empêcher toute rotation de ce dispositif d'attache pendant et après son boulonnage ;
- chaque renfort pied de volet comprend une paroi principale soudée contre la face arrière du pied inférieur d'une doublure de gouttière correspondante, ainsi qu'une patte d'attache s'étendant sensiblement selon un plan longitudinal vertical et fixée rigidement après l'assemblage desdits sous-ensembles sur la deuxième paroi longitudinale verticale du renfort latéral de base correspondant ;
- les deux renforts latéraux de base sont réalisés chacun par découpe et pliage à partir d'une tôle métallique présentant une épaisseur comprise entre 1,2 et 1,8 mm ; et
- les deux renforts de pied de volet sont réalisés chacun par découpe et pliage à partir d'une tôle métallique présentant une épaisseur comprise entre 1,5 et 2.1 mm.

L'invention vise également sous un second aspect un véhicule automobile comportant un tel agencement de zone arrière de structure de caisse.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue partielle de la zone arrière de structure de caisse selon l'invention d'un véhicule automobile à volet arrière de type hayon ;
[Fig 2] est une vue partielle du sous-ensemble de soubassement de la zone arrière de structure de caisse de la figure 1 ;
[Fig 3] représente une vue partielle de l'un des sous-ensembles latéraux de silhouette de la zone arrière de structure de caisse de la figure 1 ;
[Fig 4] est une vue partielle du sous-ensemble de panneau arrière de la zone arrière de structure de caisse de la figure 1 ; et
[Fig 5] représente une vue en coupe selon un plan sensiblement horizontal prise au niveau d'un point de fixation par boulonnage d'un renfort latéral de base sur un renfort pied de volet.

### [Description détaillée]

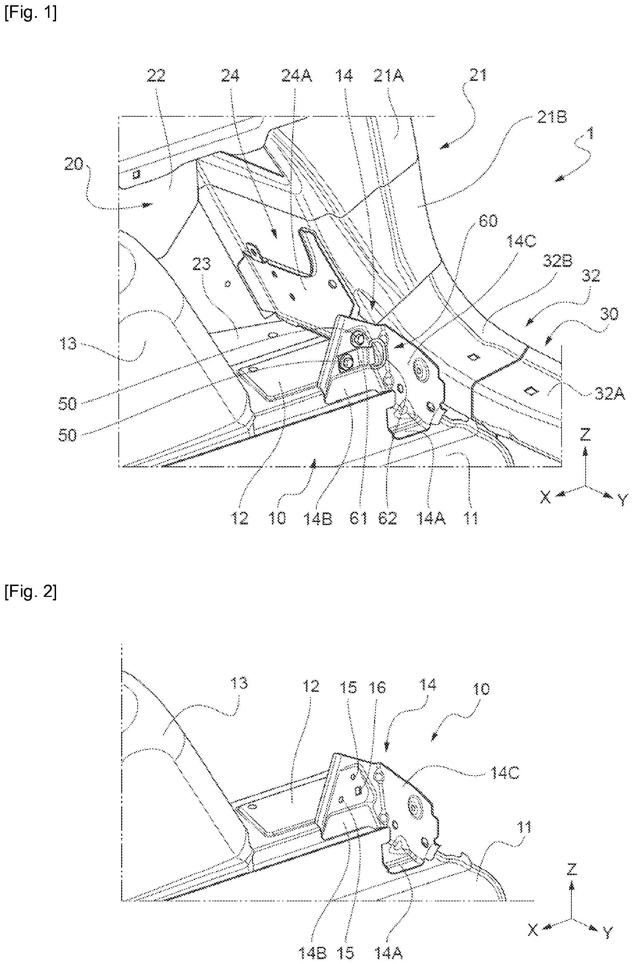

La figure 1 montre la partie inférieure droite d'une zone arrière de structure de caisse 1 selon l'invention d'un véhicule automobile à volet arrière de type hayon.

On définit par rapport au véhicule un repère orthogonal direct XYZ comprenant trois axes perpendiculaires deux à deux, à savoir :
- un axe longitudinal horizontal X, parallèle au sol et confondu avec la direction générale de déplacement du véhicule ;
- un axe transversal horizontal Y, également parallèle au sol et perpendiculaire à l'axe X ; et
- un axe vertical Z, perpendiculaire au sol ainsi qu'au plan XY horizontal.

Dans la description qui va suivre et par convention, les termes « inférieur », « supérieur », « avant » et « arrière » seront définis par rapport à la position de montage de la zone arrière de structure de caisse 1 selon l'invention dans un véhicule.

Les termes « externe » et « interne » seront quant à eux utilisés pour définir la position relative d'un élément par référence au plan longitudinal médian du véhicule. L'élément le plus proche de ce plan sera ainsi qualifié d'interne par opposition à l'autre élément plus éloigné de ce même plan qui sera quant à lui qualifié d'externe.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement perpendiculaire » indiquera qu'un écart de l'ordre de 15° par rapport à une orientation strictement perpendiculaire est admis dans le cadre de l'invention.

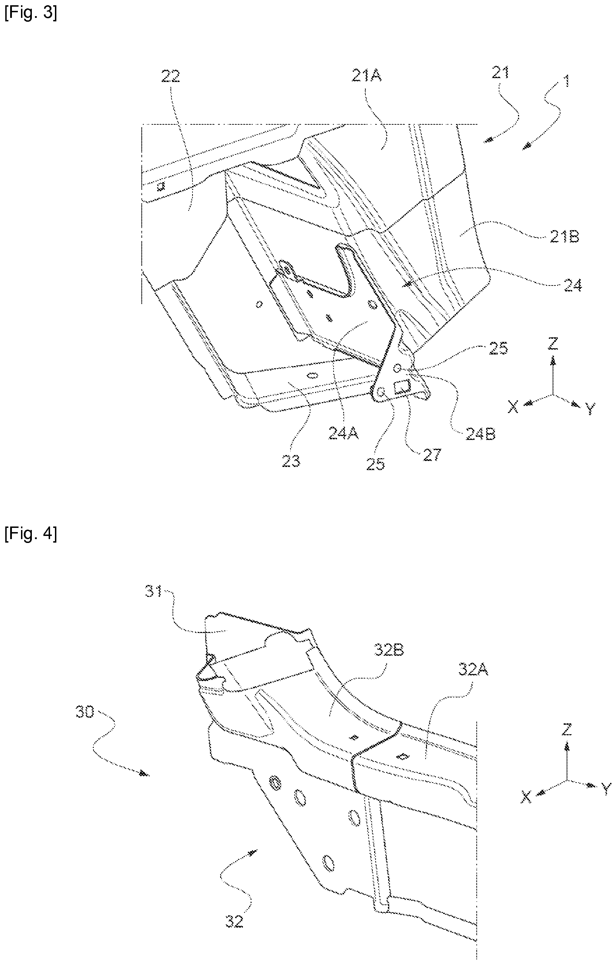

La zone arrière de structure de caisse 1 est constituée de manière classique par plusieurs sous-ensembles réalisés au préalable puis assemblés les uns aux autres sur la ligne de ferrage du véhicule, à savoir un sous-ensemble de soubassement 10 représenté seul sur la figure 2, deux sous-ensembles latéraux de silhouette dont l'un 20 (celui de droite) est représenté seul sur la figure 3, un sous-ensemble de panneau arrière 30 représenté seul sur la figure 4, et un sous-ensemble de pavillon non représenté sur les figures.

Ces sous-ensembles sont chacun constitués par une pluralité de pièces en tôle métallique soudées les unes aux autres.

En référence à la figure 2, le sous-ensemble de soubassement 10 comprend un plancher de charge 11 visible partiellement sur les figures 1 et 2, deux extensions latérales de plancher 12 (ou fermetures latérales de longeron) s'étendant de part et d'autre de la partie arrière du plancher de charge 11 (seule celle de droite étant visible sur les figures 1 et 2 tandis que celle de gauche lui est symétriquement semblable), ainsi que deux passages de roue 13 s'étendant de part et d'autre de la partie avant du plancher de charge 11 au devant des extensions latérales de plancher 12 (seul le passage de roue droit étant visible sur les figures 1 et 2 tandis que celui de gauche lui est symétriquement semblable).

Ce sous-ensemble de soubassement 10 comporte également deux renforts latéraux de base 14 (seul celui de droite étant visible sur les figures 1 et 2 tandis que celui de gauche lui est symétriquement semblable) soudés chacun au plancher de charge 11 ainsi qu'à une extension latérale de plancher 12 correspondante.

Ces deux renforts 14 sont réalisés chacun par découpe et pliage à partir d'une tôle métallique présentant une épaisseur avantageusement comprise entre 1,2 et 1,8 mm.

Chaque renfort latéral de base 14 comprend une première paroi 14A sensiblement horizontale soudée à un coin latéral arrière respectif du plancher de charge 11, une deuxième paroi 14B s'étendant sensiblement selon un plan longitudinal vertical et étant soudée par son bord inférieur au bord latéral interne d'une extension latérale de plancher 12, ainsi qu'une troisième paroi 14C s'étendant sensiblement selon un plan transversal vertical et destinée à être fixée par des points de soudure au sous-ensemble de panneau arrière 30 (comme on le verra plus en détails dans la suite).

En référence à la figure 3, les sous-ensembles latéraux de silhouette 20 comprennent chacun une gouttière (non visible) et sa doublure 21 constituée d'une partie principale 21A et d'un pied inférieur 21B), une custode (non visible) et sa doublure 22, ainsi qu'une doublure d'aile arrière 23.

Chacun des sous-ensembles latéraux de silhouette 20 comporte également un renfort pied de volet 24 soudé au pied inférieur 21B de la doublure de gouttière 21, ce renfort 24 étant réalisé par découpe et pliage à partir d'une tôle métallique présentant une épaisseur avantageusement supérieure à celle des renforts latéraux de base 14 et comprise de préférence entre 1,5 et 2.1 mm.

Chaque renfort pied de volet 24 comprend une paroi principale 24A soudée contre la face arrière du pied inférieur 21B de la doublure de gouttière 21, ainsi qu'une patte triangulaire d'attache 24B s'étendant sensiblement selon un plan longitudinal vertical.

En référence à la figure 4, le sous-ensemble de panneau arrière 30 comprend un panneau arrière 31 et sa doublure 32 constituée d'une partie centrale 32A et deux parties latérales 32B de jonction avec les pieds inférieurs 21B des doublures de gouttière 21 des deux sous-ensemble latéraux de silhouette (seule celle de droite étant visible sur les figures 1 et 2 tandis que celle de gauche lui est symétriquement semblable).

Non représenté sur les figures, le sous-ensemble de pavillon comprend notamment une traverse arrière de pavillon et sa doublure.

Sur la ligne de montage du véhicule et tel qu'illustré par la figure 1, le sous ensemble de soubassement 10, les deux sous-ensembles latéraux de silhouette 20, le sous-ensemble de panneau arrière 30 et le sous-ensemble de traverse arrière de pavillon sont assemblés les uns aux autres par une pluralité de points de soudure.

La troisième paroi transversale verticale 14C de chaque renfort latéral de base 14 est également fixée par plusieurs points de soudure à une partie latérale respective 32B de la doublure de panneau arrière 32, de sorte à apporter de la raideur entre le sous-ensemble de soubassement 10 et le sous-ensemble de panneau arrière 30.

Par ailleurs et tel qu'illustré sur les figures 1 et 4, la deuxième paroi longitudinale verticale 14B de chaque renfort latéral de base 14 est également fixée à la patte triangulaire d'attache 24B d'un renfort pied de volet respectif 24, de sorte à apporter de la raideur entre le sous-ensemble de soubassement 10 et les sous-ensembles latéraux de silhouette 20.

Leur zone d'interface étant inaccessible pour une tête de soudage, la deuxième paroi longitudinale verticale 14B de chaque renfort latéral de base 14 et la patte triangulaire d'attache 24B d'un renfort pied de volet respectif 24 sont fixés l'un à l'autre par boulonnage par l'intermédiaire de deux vis 50.

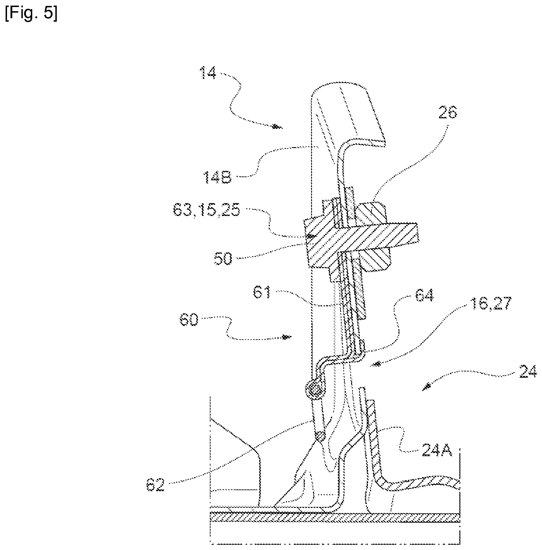

La deuxième paroi longitudinale verticale 14B de chaque renfort latéral de base 14 présente ainsi deux orifices circulaires 15 agencés de sorte à se superposer avec deux orifices circulaires correspondants 25 ménagés dans la patte triangulaire d'attache 24B d'un renfort pied de volet respectif 24 : chaque orifice 25 étant associé à un écrou 26 soudé sur son pourtour sur la face externe de cette patte triangulaire d'attache 24B opposée à celle contre laquelle vient reposer la deuxième paroi longitudinale verticale 14B (voir figure 5).

La fixation entre la deuxième paroi longitudinale verticale 14B de chaque renfort latéral de base 14 et la patte triangulaire d'attache 24B d'un renfort pied de volet respectif 24 est ainsi réalisée en boulonnant chaque vis 50, introduite préalablement au travers d'un orifice 15 et d'un orifice 25 respectifs superposés, sur un écrou correspondant 26.

Tel qu'illustré sur les figures 1 et 5, la zone arrière de structure de véhicule automobile 1 comporte également deux dispositifs d'attache 60 pour des crochets d'arrimage d'un filet de protection ou de tendeurs élastiques permettant de retenir les bagages contenus dans le coffre de ce véhicule (seul celui de droite étant visible tandis que celle de gauche lui est semblable).

Chacun des dispositifs d'attache 60 comporte classiquement une embase 61 en forme de L constituée d'une bande en tôle repliée sur elle-même, ainsi qu'un anneau métallique 62 montée mobile à libre rotation sur une première extrémité de l'embase 61 (celle située au niveau de la pliure de la bande de tôle).

L'embase 61 de chaque dispositif d'attache 60 présente, à proximité de sa seconde extrémité opposée à l'anneau 62, un orifice circulaire 63 permettant la fixation de ce dispositif d'attache 60 par boulonnage sur un renfort latéral de base 14 et un renfort pied de volet 24 respectifs : l'une des vis 50 étant introduite au travers de cet orifice 63 avant de traverser deux orifices superposés 15 et 25 puis d'être boulonnée sur un écrou correspondant 26.

L'utilisation de cette technique de fixation pour les dispositifs d'attache 60 présente l'avantage de satisfaire aux normes internationales limitant leur déplacement sous charge (chaque embase 61 étant séparée d'un écrou 26 par une double épaisseur de tôle formée par la superposition de la paroi longitudinale verticale 14B d'un renfort latéral de base 14 et de la patte triangulaire d'attache 24B d'un renfort pied de volet 24) sans surcoût ni augmentation de la masse du véhicule (aucun besoin de prévoir des pièces de renfort locales ni des vis supplémentaires).

De manière avantageuse, l'embase 61 de chaque dispositif d'attache 60 comprend une patte saillante 64 (visible sur la figure 5) traversant successivement deux fenêtres superposées 16, 27 ménagées respectivement dans le renfort latéral de base 14 et le renfort de pied de volet correspondants de sorte à empêcher toute rotation de ce dispositif d'attache pendant et après son boulonnage.

## Revendications

1. Agencement de zone arrière de structure de caisse de véhicule automobile à volet arrière de type hayon, comportant une pluralité de sous-ensembles (10, 20, 30) constitués de pièces en tôles métalliques et assemblés les uns aux autres pour former ladite zone arrière, dont en particulier un sous-ensemble de soubassement (10) comprenant un plancher de charge (11) et deux extensions latérales de plancher (12) s'étendant de part et d'autre de la partie arrière dudit plancher de charge (11), deux sous-ensemble latéraux de silhouette (20) comprenant chacun une doublure de gouttière (21) dotée d'un pied inférieur (21B), ainsi qu'un sous-ensemble de panneau arrière (30) comprenant une doublure de panneau arrière (32) dotée de deux parties latérales (32B) de jonction avec lesdits pieds inférieurs (21B) des deux sous-ensemble latéraux de silhouette (20) ; ledit sous-ensemble de soubassement (10) comportant également deux renforts latéraux de base (14) soudés chacun audit plancher de charge (11) ainsi qu'à une extension latérale de plancher correspondante (12), et en ce que chacun desdits sous-ensembles latéraux de silhouette (20) comporte également un renfort pied de volet (24) soudé au pied inférieur (21B) de sa doublure de gouttière (21), chaque renfort latéral de base (14) étant fixé rigidement après l'assemblage desdits sous-ensembles à un renfort de pied de volet correspondant (24) , **caractérisé en ce que** chaque renfort latéral de base (14) comprend une première paroi (14A) sensiblement horizontale soudée à un coin latéral arrière respectif dudit plancher de charge (11), une deuxième paroi (14B) s'étendant sensiblement selon un plan longitudinal vertical et étant soudée par son bord inférieur au bord latéral interne d'une dite extension latérale de plancher (12), ainsi qu'une troisième paroi (14C) s'étendant sensiblement selon un plan transversal vertical et soudée après l'assemblage desdits sous-ensembles (10, 20, 30) sur une partie latérale (32B) correspondante de la doublure de panneau arrière (32) du sous-ensemble de panneau arrière (30).

2. Agencement de zone arrière de structure de caisse selon la revendication 1, **caractérisé en ce que** chaque renfort latéral de base (14) est fixé par boulonnage sur un renfort de pied de volet correspondant (24) par l'intermédiaire d'au moins une vis (50), introduite préalablement au travers de deux orifices superposés (15, 25) ménagés respectivement dans l'un et l'autre de ces éléments, puis boulonnée sur un écrou soudé (26) sur le pourtour de l'un de ces orifices.

3. Agencement de zone arrière de structure de caisse selon la revendication 2, **caractérisé en ce que** chaque renfort latéral de base (14) est fixé par boulonnage sur un renfort de pied de volet correspondant (24) par l'intermédiaire de deux dites vis (50), introduites chacune préalablement au travers de deux orifices respectifs superposés (15, 25) ménagés respectivement dans l'un et l'autre de ces éléments, puis boulonnées chacune sur un écrou correspondant (26) soudé sur le pourtour de l'un de ces orifices.

4. Agencement de zone arrière de structure de caisse selon l'une des revendications 2 ou 3, **caractérisé en ce qu'**il comporte également deux dispositifs d'attache (60) pour des crochets d'arrimage comprenant chacun une embase (61) pourvue d'un orifice de fixation (63) ainsi qu'un anneau (62) monté mobile à libre rotation sur une première extrémité de cette embase (61), chaque dispositif d'attache (60) étant fixé par boulonnage sur un renfort latéral de base (14) et un renfort pied de volet (24) respectifs par l'intermédiaire d'une dite vis (50) introduite au travers de son orifice de fixation (63) avant de traverser deux dits orifices superposés (15, 25) du renfort latéral de base (14) et du renfort de pied de volet (24) puis d'être boulonnée sur un dit écrou (26).

5. Agencement de zone arrière de structure de caisse selon la revendication 4, **caractérisé en ce que** l'embase (61) de chaque dispositif d'attache comprend une patte saillante (64) traversant successivement deux fenêtres superposées (16, 27) ménagées respectivement dans le renfort latéral de base (14) et le renfort de pied de volet (24) correspondants de sorte à empêcher toute rotation de ce dispositif d'attache (60) pendant et après son boulonnage.

6. Agencement de zone arrière de structure de caisse selon l'une quelconque des revendications précédentes, **caractérisé en ce que** chaque renfort pied de volet (24) comprend une paroi principale (24A) soudée contre la face arrière du pied inférieur (21B) d'une doublure de gouttière (21) correspondante, ainsi qu'une patte d'attache (24B) s'étendant sensiblement selon un plan longitudinal vertical et fixée rigidement après l'assemblage desdits sous-ensembles (10, 20, 30) sur la deuxième paroi longitudinale verticale (14B) du renfort latéral de base (14) correspondant.

7. Agencement de zone arrière de structure de caisse selon l'une des revendications 1 à 6, **caractérisé en ce que** les deux renforts latéraux de base (14) sont réalisés chacun par découpe et pliage à partir d'une tôle métallique présentant une épaisseur comprise entre 1,2 et 1,8 mm.

8. Agencement de zone arrière de structure de caisse selon l'une des revendications 1 à 7, **caractérisé en ce que** les deux renforts de pied de volet (24) sont réalisés chacun par découpe et pliage à partir d'une tôle métallique présentant une épaisseur comprise entre 1,5 et 2.1 mm.

9. Véhicule automobile **caractérisé en ce qu'**il comporte un agencement de zone arrière de structure de caisse selon l'une des revendications 1 à 8. 1

## Patentansprüche

1. Hinterraumanordnung einer Kraftfahrzeugkarosserie mit einer Heckklappe vom Heckklappentyp, die eine Vielzahl von Untereinheiten (10, 20, 30) umfasst, die aus Metallblechen bestehen und miteinander verbunden sind, um den Heckbereich zu bilden, insbesondere eine Unterbaugruppe (10), die einen Lastboden (11) und zwei Bodenseitenverlängerungen (12) umfasst, die sich beiderseits des hinteren Teils des Lastbodens (11) erstrecken, wobei zwei seitliche Silhouettenuntereinheiten (20) jeweils eine Rinnenauskleidung (21) mit einem unteren Fuß (21B) und eine hintere Plattenuntereinheit (30) mit einer hinteren Plattenauskleidung (32) mit zwei Seitenteilen (32) aufweisen 2B) zur Verbindung mit den unteren Füßen (21B) der beiden seitlichen Teileinheiten (20); Die Unterbaugruppe (10) umfasst ferner zwei seitliche Basisverstärkungen (14), die jeweils mit dem Lastboden (11) und einer entsprechenden seitlichen Bodenerstreckung (12) verbunden sind, und dass jede der seitlichen Unterbaugruppen (20) auch einen Klappenstützfuß (24) aufweist, der mit dem unteren Fußteil (21B) seiner Unterbaugruppe verschweißt ist Rinnenring (21), wobei jede seitliche Basisverstärkung (14) nach dem Zusammenbau der Untereinheiten mit einer entsprechenden Klappenfußverstärkung (24) starr befestigt ist, **Dadurch gekennzeichnet, dass** jede seitliche Basisverstärkung (14) eine erste, im Wesentlichen horizontale Wand (14A) umfasst, die an eine jeweilige hintere Seitenecke des Lastbodens (11) angeschweißt ist, eine zweite Wand (14B), die sich im Wesentlichen entlang einer vertikalen Längsebene erstreckt und mit ihrem unteren Rand an den inneren Seitenrand einer solchen seitlichen Bodenverlängerung (12) angeschweißt ist, sowie eine dritte Wand (14 C) sich im Wesentlichen entlang einer vertikalen Querebene erstreckt und nach dem Zusammenbau der Unterbaugruppen (10, 20, 30) an einem entsprechenden Seitenteil (32B) der Rückwandverkleidung (32) der Rückwandbaugruppe (30) verschweißt ist.

2. Kastenstruktur-Hinterzonenanordnung nach Anspruch 1, **dadurch gekennzeichnet, dass** jede seitliche Basisverstärkung (14) durch Schrauben an einer entsprechenden Klappenfußverstärkung (24) über mindestens eine Schraube (50) befestigt ist, die durch zwei übereinander liegende Öffnungen (15, 25), die jeweils in einem dieser Elemente ausgebildet sind, vorgeschoben wird dann auf einer Schweißmutter (26) am Umfang einer dieser Öffnungen verschraubt.

3. Kastenstruktur-Hinterzonenanordnung nach Anspruch 2, **dadurch gekennzeichnet, dass** jede seitliche Basisverstärkung (14) durch Schrauben an einer entsprechenden Klappenfußverstärkung (24) durch zwei Schrauben (50) befestigt ist, die jeweils durch zwei jeweils übereinander liegende Öffnungen (15, 25) in dem einen bzw. dem anderen dieser Elemente eingeführt werden und dann jeweils mit einer entsprechenden Mutter (26) verschraubt werden, die am Umfang einer dieser Öffnungen angeschweißt ist.

4. Kastenstruktur-Hinterzonenanordnung nach einem der Ansprüche 2 oder 3, **dadurch gekennzeichnet, dass** sie außerdem zwei Befestigungseinrichtungen (60) für Befestigungshaken aufweist, die jeweils eine Basis (61) mit einer Befestigungsöffnung (63) sowie einen Ring (62) umfassen, der frei drehbar an einem ersten Ende dieser Basis (61) angebracht ist Jede Befestigungsvorrichtung (60) ist durch Schrauben an einer seitlichen Basisverstärkung (14) und einem entsprechenden Klappenfuß (24) mittels einer Schraube (50) befestigt, die durch ihre Befestigungsöffnung (63) eingeführt wird, bevor sie durch zwei der übereinander liegenden Öffnungen (15, 25) der seitlichen Basisverstärkung (14) und der Basisverstärkung geht Klappe (24), die dann an einer Mutter (26) angeschraubt wird.

5. Kastenstruktur-Hinterzonenanordnung nach Anspruch 4, **dadurch gekennzeichnet, dass** die Basis (61) jeder Befestigungsvorrichtung eine vorspringende Lasche (64) umfasst, die nacheinander zwei übereinander liegende Fenster (16, 27) durchquert, die jeweils in der seitlichen Basisverstärkung (14) und der entsprechenden Klappenfußverstärkung (24) vorgesehen sind, um eine Drehung dieser Vorrichtung zu verhindern Befestigungseinrichtung (60) während und nach dem Schrauben.

6. Kastenstruktur-Hinterzonenanordnung nach einem der vorhergehenden Ansprüche, **dadurch gekennzeichnet, dass** jede Klappenbeinverstärkung (24) eine Hauptwand (24A), die an die Rückseite des unteren Fußes (21B) einer entsprechenden Dacheinlage (21) angeschweißt ist, sowie eine Befestigungslasche (24B) umfasst, die sich im Richtung erstreckt Vertikale Längsebene, die nach dem Zusammenbau der Unterbaugruppen (10, 20, 30) an der zweiten vertikalen Längsseite (14B) der entsprechenden seitlichen Basisverstärkung (14) starr befestigt ist.

7. Kastenstruktur-Hinterzonenanordnung nach einem der Ansprüche 1 bis 6, **dadurch gekennzeichnet, dass** die beiden Basisseitenverstärkungen (14) jeweils durch Schneiden und Biegen aus einem Metallblech mit einer Dicke zwischen 1,2 und 1,8 mm hergestellt sind.

8. Kastenstrukturhinterzonenanordnung nach einem der Ansprüche 1 bis 7, **dadurch gekennzeichnet, dass** die beiden Klappenfußverstärkungen (24) jeweils durch Schneiden und Biegen aus einem Metallblech mit einer Dicke zwischen 1,5 und 2,1 mm hergestellt sind.

9. Kraftfahrzeug, **dadurch gekennzeichnet, dass** es eine Hinterzonenanordnung der Karosseriestruktur nach einem der Ansprüche 1 bis 8 aufweist.

## Claims

1. Rear area arrangement of hayon-type rear-flap motor vehicle body structure, consisting of a plurality of subassemblies (10, 20, 30) consisting of metal sheet parts and assembled together to form the rear-flap vehicle body structure, including in particular a subset of underlay (10) comprising a load floor (11) and two lateral floor extensions (12) extending on both sides of the rear part of the said load floor (11), two side subassemblies of silhouette (20), each comprising a gutter lining (21) with a lower foot (21B), and a rear panel subset (30) with a back panel lining (32) with two parts lateral (32B) junction with the said lower feet (21B) of the two lateral subassemblies of silhouette (20); the said subset of base (10) also having two base lateral reinforcements (14) welded each to the load floor (11) and to a corresponding lateral floor extension (12), and each of the said lateral subsets of silhouette (20) also has a strap foot reinforcement (24) welded to the bottom foot (21B) of its gutter lining (21), with each basic side reinforcement (14) fixed rigidly after the assembly of the said subassemblies to a corresponding flap foot reinforcement (24), **characterized by** the fact that each base lateral reinforcement (14) consists of a first wall (14A) which is substantially horizontal welded to a respective rear side corner of the said load floor (11), a second wall (14B) which extends substantially in a vertical longitudinal plane and is welded by its lower edge to the inner side edge of a so-called floor lateral extension (12), and a third wall (14C) extending substantially in a vertical and welded transverse plane after the assembly of the said subassemblies (10, 20, 30) on a corresponding lateral part (32B) of the rear panel lining (32) of the rear panel subset (30).

2. Rear area arrangement of body structure according to Claim 1, characterized that each basic lateral reinforcement (14) is fastened by bolting on a corresponding flap foot reinforcement (24) through at least one screw (50), introduced beforehand through two overlapping holes (15, 25) housed in one and the other, respectively Other of these elements, then bolted on a welded nut (26) on the edge of one of these orifices.

3. Rear area arrangement of body structure according to Claim 2, characterized that each basic lateral reinforcement (14) is fastened by bolting on a corresponding flap foot reinforcement (24) through two screws (50), each introduced beforehand through two respective overlapping holes (15, 25), respectively housed in one and the other Other of these elements, then bolted each on a corresponding nut (26) welded on the rim of one of these orifices.

4. Rear box arrangement of the body structure according to one of Claims 2 or 3, characterized as it also includes two fastening devices (60) for tie-downs, each of which includes a base (61) with a fastening hole (63) and a ring (62) mounted free-rotation on a first end of that base (61), each attachment device (60) being fastened by bolting on a base lateral reinforcement (14) and a respective flap foot reinforcement (24) by means of a said screw (50) introduced through its fixing hole (63) before crossing two said overlapping holes (15, 25) of the base lateral reinforcement (14) and flap foot reinforcement (24) and then bolted on a said nut (26).

5. Rear area arrangement of the body structure according to Claim 4, characterized that the base (61) of each attachment device includes a salient leg (64) passing through two overlapping windows (16, 27) housed respectively in the respective base lateral reinforcement (14) and flap foot reinforcement (24) so to prevent any rotation of this fastening device (60) during and after its bolting.

6. Rear box arrangement of the body structure in accordance with any of the previous claims, **characterized by** that each strap foot reinforcement (24) includes a main wall (24A) welded against the rear face of the lower foot (21B) of a corresponding gutter lining (21), and a tether leg (24B) extending substantially in accordance with a vertical longitudinal plane fixed rigidly after the assembly of the said subassemblies (10, 20, 30) on the second vertical longitudinal wall (14B) of the corresponding base lateral reinforcement (14).

7. Rear box arrangement of the body structure according to one of the claims 1 to 6, **characterized by** that the two basic side reinforcement (14) are each made by cutting and bending from a metal sheet with a thickness of between 1.2 and 1.8 mm.

8. Rear box arrangement of the body structure according to one of the claims 1 to 7, **characterized by** the fact that the two foot reinforcements (24) are each made by cutting and folding from a metal sheet having a thickness between 1.5 and 2.1 mm.

9. A motor vehicle **characterized in that** it has a rear area layout of a body structure according to one of the claims 1 to 8.
